# EUROPÄISCHE PATENTSCHRIFT

(11) **EP 1 452 703 B1**
(45) Veröffentlichungstag und Bekanntmachung des Hinweises auf die Patenterteilung: **17.05.2006**
(21) Anmeldenummer: 04003919.0
(22) Anmeldetag: 20.02.2004
(51) Int. Cl.: F01N 3/027, F01N 3/022, B01D 46/24, B01D 39/20

(54) **Regenerierbares Partikelfilter**
Regenerable particulate filter
Filtre à particules régénérable

(30) Priorität: 28.02.2003 DE 10308675
(43) Veröffentlichungstag der Anmeldung: 01.09.2004
(73) Patentinhaber: ADAM OPEL AG, 65423 Rüsselsheim (DE)
(72) Erfinder: Mönnig, Ronny, 65183 Wiesbaden (DE); Zima, Peter, Dr., 55130 Mainz (DE)

(56) Entgegenhaltungen:
- US-A- 4 456 457
- US-A- 4 662 911
- US-A- 5 053 603

## Beschreibung

Die Erfindung betrifft ein regenerierbares Partikelfilter gemäß dem Oberbegriff des Patentanspruches 1.

Ein derartiges Partikelfilter ist mit US 4 662 911 beschrieben. Bei diesem bekannten Partikelfilter ist ein elektrisches Heizelement in einen Filterkörper eingebettet, der stromaufwärts von einem Wabenfilter angeordnet ist. Der Wabenfilter ist mit einer Vielzahl von in Strömungsrichtung ausgerichteten Kanälen versehen, die entweder an einem stromabwärtigen oder einem stromaufwärtigen, dem Filterkörper zugewandten Ende verschlossen sind, um den Abgasstrom zu zwingen, die Wände zwischen den Kanälen zu durchdringen. Wenn sich Ruß in dem Filterkörper sammelt, nimmt der Strömungswiderstand des Filters zu, und um den Ruß zu beseitigen, wird der Filterkörper durch das eingebettete Heizelement erhitzt, so dass die darin aufgefangenen Rußpartikel verbrennen.

Für ein ordnungsgemäßes Funktionieren der Filterregeneration muss die in dem Filter gesammelte Rußmenge so groß sein, dass die Verbrennung der Rußteilchen sich in stromabwärts vom Heizelement gelegene Bereiche des Filters fortpflanzen kann. Die hierfür erforderliche Rußmenge bewirkt einen unerwünschten Strömungswiderstand des Filters.

Der Erfindung liegt somit die Aufgabe zugrunde, ein Partikelfilter der gattungsgemäßen Art zu schaffen, das eine zuverlässige Regeneration bei niedrigem Strömungswiderstand ermöglicht.

Erfindungsgemäß wird diese Aufgabe mit den kennzeichnenden Merkmalen des Patentanspruches 1 gelöst.

Mit den Merkmalen der weiteren Ansprüche sind vorteilhafte Weiterentwicklungen der Erfindung beschrieben.

An der Trennfuge zwischen vorderem und hinterem Filterteil kann bei der Montage auch relativ einfach ein Heizelemententräger zusammen mit der Keramikscheibe eingebracht werden. Von Vorteil kann es sein, wenn die Keramikscheibe gleichzeitig als Heizelemententräger dient. Der Fertigungsaufwand wird durch diese Maßnahmen gegenüber bisher bekannten Filterbauarten mit vergleichbarer Wirkung erheblich reduziert.

Bei der Keramikscheibe handelt es sich vorzugsweise um eine hochporöse Scheibe, deren Dicke bzw. Stärke sich nach der jeweiligen Materialporösität bemisst. Maßstab ist hierbei eine ausreichende mechanische Festigkeit.

Da der in Strömungsrichtung hinter den Heizelementen und damit auch hinter der Keramikscheibe liegende Teil des Filterkörpers bei einer Filterregeneration durch Verbrennen der Ablagerungen besonders hoch durch Wärme belastet ist, wurde für diesen Teil ein Werkstoff gewählt, der diesen Anforderungen gerecht wird. Ein solcher Werkstoff ist z. B. Siliziumcarbid.

Für den davor liegenden Teil des Filterkörpers ist in vorteilhafter Weise ein Werkstoff ausreichend, der zur Aufnahme der Heizelemente eine geringere Warmfestigkeit aufweist sowie elektrisch nicht-leitend sein sollte und ein geringeres Gewicht hat. Ein solcher Werkstoff ist z. B. Cordirit.

Durch eine solche Bauweise kann neben einer Einsparung an Materialkosten das Gesamtgewicht des Partikelfilters bei vergleichsweise zumindest gleicher Funktionssicherheit und Lebensdauer, wie herkömmliche Partikelfilter, reduziert werden.

Die Keramikscheibe besteht z. B. aus einem Keramikschaum. Diese kann relativ einfach in beliebiger Form hergestellt werden, wobei auch die Einformung der elektrischen Heizelemente und deren elektrischen Anschlüsse unproblematisch möglich ist.

Es hat sich gezeigt, dass es für eine gute Regenerierwirkung von Vorteil ist, wenn die Keramikscheibe und die Heizelemente näher am Abgaszuführrohr als am Abgasableitungsrohr angeordnet sind. Die Heizelemente sind dabei in Strömungsrichtung des Abgases in den abströmenden Filterkanälen vor der Keramikscheibe oder innerhalb derselben integriert angeordnet und können so unmittelbar auf die Rußpartikel, die sich vor der Keramikscheibe absetzen, einwirken.

Bei einem Filter-Regenerations-Vorgang werden; ausgehend von den Heizelementen, die angelagerten Rußpartikel sowohl an der Keramikscheibe als auch an den Wänden des Filterkörpers verbrannt. Die dabei entstehende zusätzliche Wärme, leitet die Filterregenerierung insbesondere in dem Teil des keramischen Filters ein, der in Strömungsrichtung gesehen, hinter der Keramikscheibe angeordnet ist. Hierdurch wird insbesondere im hinteren Teil des Filters ein vollständige Regeneration angestrebt.

Die Erfindung wird nachfolgend anhand zweier Ausführungsformen näher beschrieben. Es zeigen:
- Fig. 1: einen schematisch Schnitt durch ein erfindungsgemäßes Partikelfilter, wobei sich die erfindungsgemäße Keramikfilterscheibe über den gesamten Partikelfilterquerschnitt erstreckt.
- Fig. 2: eine Schnittdarstellung entsprechend Fig. 1, wobei sich die erfindungsgemäße Keramikfilterscheibe nur teilweise über den Partikelfilterquerschnitt erstreckt.
- Fig. 3: eine perspektivische Ansicht eines erfindungsgemäßen Keramikscheibenfilters
- Fig. 4: eine Seitenansicht eines erfindungsgemäßen Keramikscheibenfilters mit stromführenden Teilen der Filterheizung.

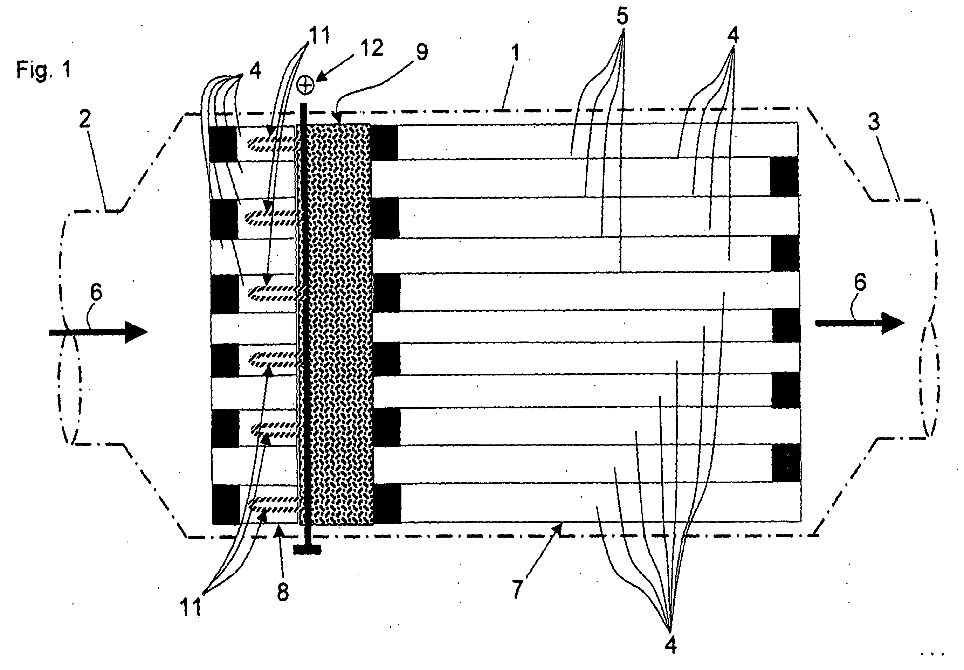

Fig. 1 ist ein erfindungsgemäßer Partikelfilter zu entnehmen, bei dem in einem Filtergehäuse 1, mit einem Abgaszuführrohr und einem Abgasableitungsrohr 3 - angedeutet durch strichpunktierte Linien -ein keramischer Filterkörper angeordnet ist, der mit einer Vielzahl von in Strömungsrichtung des Abgases verlaufenden Kanälen 4 versehen ist. Ein Teil der Kanäle 4 ist jeweils an dem dem Abgaszuführrohr 2 und der andere Teil jeweils an dem dem Abgasableitungsrohr 3 zugewandten Ende verschlossen. Die Kanäle 4 sind durch poröse Wände 5 voneinander getrennt. Die Richtung des Abgasstromes ist mit den Pfeilen 6 angegeben.

Der keramische Filterkörper besteht dabei aus zwei in Strömungsrichtung des Abgases angeordneten Teilen 7 und 8. Zwischen den beiden Teilen 7 und 8 ist eine relativ dünne hochporöse Keramikscheibe 9 angeordnet, welche sich über den gesamten Querschnitt des Filtergehäuses 1 erstreckt. In unmittelbarer Verbindung mit der Keramikscheibe 9 befindet sich ein Heizelementträger 10 mit elektrischen Heizelementen 11. Die Heizelemente 11 erstrecken sich in Kanäle 4 des dem Abgaszuführrohr 2 nächstliegenden Teils 7 des keramischen Filterkörpers, und zwar in solche Kanäle 4, die in Richtung zum Abgaszuführrohr 2 verschlossen sind. Die Heizelemente 11 sind über den Heizelementträger 10, welcher mit elektrischen Anschlussklemmen 12 versehen ist, die von außerhalb des Filtergehäuses 1 zugänglich sind, mit elektrischer Energie versorgbar.

Der an der Abströmseite des Partikelfilters angeordnete Teil 7, des keramischen Filterkörpers besteht aus einem keramischen Werkstoff hoher Festigkeit und Wärmeleitfähigkeit, z. B. Siliziumcarbid. Der andere in Strömungsrichtung vor der Keramikscheibe 9 angeordnete Teil 8 des Filterkörpers besteht dagegen aus einem vergleichsweise thermisch weniger anspruchsvollem Werkstoff, d.h. vorzugsweise aus keramischen Werkstoffen wie z. B. Cordirit.

Dieser vor der Keramikscheibe 9 angeordnete Teil 8 kann, ebenso wie die Keramikscheibe 9, als Heiz-Elementträger 10 ausgebildet sein.

Die Verwendung unterschiedlicher und an die Belastung angepasster Werkstoffe für die beiden Teile 7, 8 des keramischen Filterkörpers führt zu geringerem Gewicht des Partikelfilters und zu reduzierten Herstellungskosten. Die Keramikscheibe 9 besteht aus einem hochporösen Keramikschaum, wie z.B. α-Al₂O₃, ZrO₂, SiC, SiN, AlN, Cordirite etc. Sie ist in Strömungsrichtung gesehen relativ dünn, beispielsweise zwischen 3 und 40mm oder zwischen 3 und 20 mm, wobei die Anzahl von Poren pro Inch (ppi), d.h. pro 2,54cm, generell zwischen 10 und 100 ppi liegen kann, und wobei gemäß einer besonders bevorzugten Weiterbildung der Erfindung die Werte zwischen 30 und 60 ppi liegen. Dabei hängt die verwendete Poren-Dichte zur Erzielung der gewünschten Filterwirkung von der gewählten Scheiben-Stärke bzw. Dicke ab. In der Umkehrung gilt das vorher gesagte entsprechend.

Die Keramikscheibe 9 wirkt innerhalb des Partikelfilters als konventionelles Filter, an dem sich ein wesentlicher Teil der im Abgas mitgeführten Rußpartikel absetzen. Weitere, insbesonders kleinere Partikel durchdringen die porösen Wände 5 und setzen sich innerhalb der Kanäle 4 an den Wänden 5 ab.

Sobald das Partikelfilter soweit mit Partikeln beladen ist, dass der Durchgangswiderstand für das Abgas einen definierten Wert erreicht, wird zum Regenerieren des Partikelfilters an die Anschlussklemmen 12 der Heizelemente 11 eine elektrische Spannung angelegt, so dass ein Strom über die Heizelemente 11 fließt und diese aufheizt. Die dabei entstehende Wärme wirkt unmittelbar auf die dort abgelagerten Rußpartikel und entzündet sie. Die Rußzündung im Teil 8 wird vorzugsweise durch eine Beschichtung, die katalytisch wirksam ist, unterstützt. Die dabei zusätzlich entstehende Verbrennungswärme wird vom Abgasstrom in den nachfolgenden Teil 7 des Filterkörpers transportiert. Sie unterstützt das vollständige Abbrennen der dort abgelagerten Partikel.

Der besondere Vorteil der Erfindung ist darin zu sehen, dass komplizierte sowie wenig dauerhaltbare (oder sich leicht lösende Verbindungen) keramische Übergänge zwischen Filterteilen und Heizelementen vermieden werden. Damit wird die Herstellung des Partikelfilters vereinfacht, seine Dauerhaltbarkeit erhöht und sein Gewicht reduziert. Darüber hinaus wird die Regeneration des Filters verbessert.

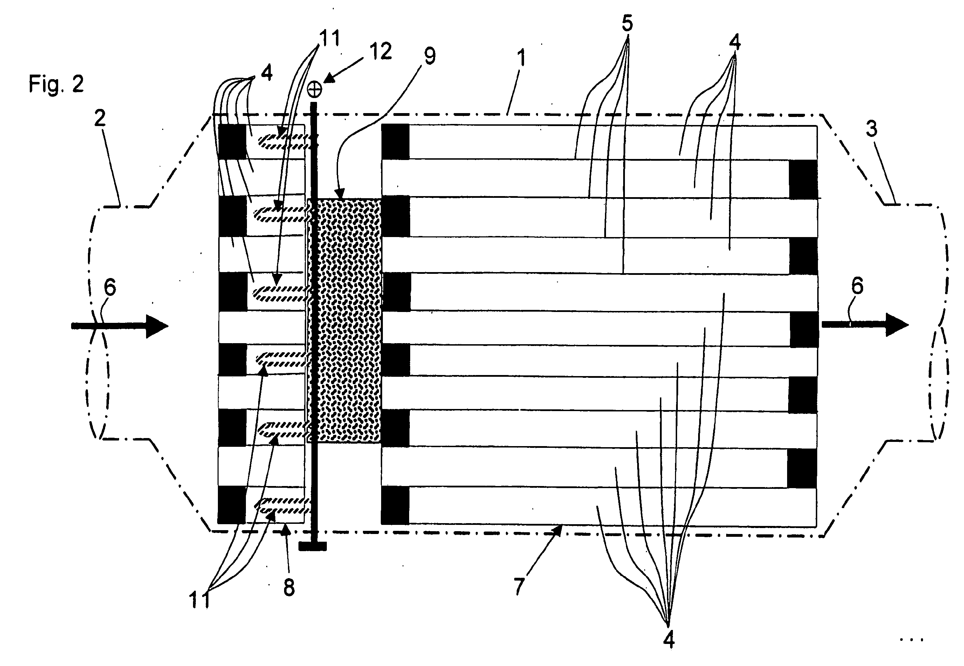

Im Unterschied zum Partikelfilter nach Fig. 1 zeigt Fig. 2 einen Partikelfilter, bei dem die Keramikscheibe 9 eine Breite, einen Durchmesser oder einen Querschnitt aufweist, welcher kleiner ist als der Querschnitt oder Durchmesser des Partikelfilters als ganzes. Dabei liegt nach dem Ausführungsbeispiel gemäß Fig. 2 die Keramikscheibe 9 koaxial bzw. symmetrisch zur Längsachse des Partikelfilters. Entsprechend zum Partikelfilter gemäß Fig. 1 weist der vordere Teil 8 des Partikelfilters ein bedingt warmfestes Material auf. Die Keramikscheibe 9 hingegen sollte ein hochwarmfestes Material umfassen, welches eine gute Wärmeleitfähigkeit besitzt und elektrisch nichtleitend ist. Gleichfalls sollte der hintere Teil 7 des Partikelfilters ein hochwarmfestes Material mit sehr gute wärmeleitende Eigenschaften beinhalten, wobei sich jedoch eine mögliche elektrische Leitfähigkeit des Materials nicht störend auswirkt.

Die Ausführungsform nach Fig. 2 weist zusätzlich den Vorteil auf, dass infolge des geringeren Strömungswiderstands der Abgasgegendruck auf einem insgesamt niedrigen Niveau gehalten werden kann.

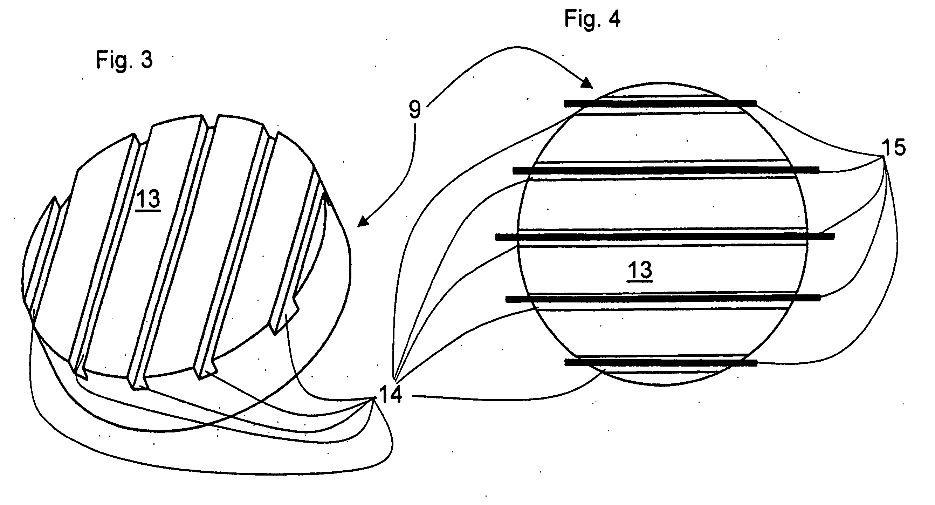

In Fig. 3 ist eine perspektivische Ansicht einer möglichen Ausführungsform einer erfindungsgemäßen Keramikscheibe 9 gezeigt. Die hierbei sichtbare Fläche 13 ist mit Kanälen oder Rillen 14 durchzogen. Die Kanäle 14 dienen zur Aufnahme und Führung der stromführenden Elemente oder Drähte 15 (Fig. 4), welche die Heizelemente 11 mit Strom versorgen. Die Keramikscheibe hat somit mit Vorteil eine Doppelfunktion. Sie dient zum einen als Rußsammler und zum anderen als Träger für die Heizelemente 11 und deren Versorgungsleitungen 15. Die Größe der Scheibe 9 richtet sich dabei insbesondere auch nach der Menge an zu sammelnden Ruß, um bei der Verbrennung desselben eine ausreichende Erhitzung des Abgases zu erzielen, so dass es auch zu einer Regeneration des Filters stromabwärts kommt. Hiermit können die Verbrennungsgase auf ca. 700°C erwärmt werden. Richtschur hierbei ist die Selbstentzündungsgrenze des gefilterten Rußes an den beschichteten, imprägnierten porösen Wänden 5 (Fig. 1, 2).

### Bezugszeichenliste

- Filtergehäuse: 1
- Abgaszuführrohr: 2
- Abgasableitungsrohr: 3
- Kanäle: 4
- Poröse Wände: 5
- Pfeile (Richtung Abgasstrom): 6
- Teile: 7, 8
- Keramikscheibe: 9
- Heizelementträger: 10
- Heizelement: 11
- Anschlussklemme: 12
- Fläche der Keramikscheibe: 13
- Kanäle: 14
- Drähte: 15

## Patentansprüche

1. Regenerierbares Partikelfilter, insbesondere zum Entfernen von Rußpartikeln aus Abgasen von Brennkraftmaschinen, mit einem eine Abgaszu- und Ableitung (2; 3) aufweisenden Filtergehäuse (1), in welchem zwischen der Abgaszuleitung (2) und der Abgasableitung (3) ein in Strömungsrichtung vorderer Filterteil (8), ein in Strömungsrichtung hinterer Filterteil (7) und in Strömungsrichtung zwischen diesen Teilen (7, 8), den Strömungsquerschnitt zumindest teilweise überdeckend, ein Filterelement (9) und ein Heizelement (11) zur Aufheizung des an den Filterteilen (7, 8) abgelagerten Filtrats bzw. Rußes auf Entzündungstemperatur angeordnet sind, **dadurch gekennzeichnet, dass** Kanäle (4) zum Ausbilden eines definierten Strömungsprofils der partikelbeladenen Abgasströme, die zumindest teilweise Verschlussbereiche aufweisen, im vorderen Filterteil (8) über den Strömungsquerschnitt verteilt sind.

2. Regenerierbares Partikelfilter nach Anspruch 1, **dadurch gekennzeichnet, dass** das Filterelement (9) aus einem keramischen Material besteht.

3. Regenerierbares Partikelfilter nach einem der vorhergehenden Ansprüchen, **dadurch gekennzeichnet, dass** das Heizelement (11) von einem Heizelementträger (10) gehalten wird.

4. Regenerierbares Partikelfilter nach Anspruch 3 **dadurch gekennzeichnet, dass** das Filterelement (9) den Heizelementträger (10) umfasst.

5. Regenerierbares Partikelfilter nach einem der vorhergehenden Ansprüchen, **dadurch gekennzeichnet, dass** der hintere Filterteil (7) einen Werkstoff mit hoher Wärmebeständigkeit und guter Wärmeleitfähigkeit umfasst und dass der vordere Filterteil (8) aus einem gegenüber dem ersten Teil (7) thermisch weniger anspruchsvollen keramischen Werkstoff besteht.

6. Regenerierbares Partikelfilter nach Anspruch 5, **dadurch gekennzeichnet, dass** der hintere Filterteil (7) aus Siliziumcarbid und der vordere Filterteil (8) aus Cordirit besteht.

7. Regenerierbares Partikelfilter nach einem der Ansprüche 1 bis 6, **dadurch gekennzeichnet, dass** das Filterelement (9) eine aus einem hochporösen Keramikschaum gefertigte Keramikscheibe (9) ist.

8. Regenerierbares Partikelfilter nach einem der Ansprüche 1 bis 7, **dadurch gekennzeichnet, dass** die Dicke des Filterelements (9), in Strömungsrichtung des Abgases gemessen, 3 bis 40 mm beträgt.

9. Regenerierbares Partikelfilter nach einem der vorhergehenden Ansprüche, **dadurch gekennzeichnet, dass** die Porenanzahl des Filterelements (9) im Bereich zwischen 4 und 40 Poren/cm (10 und 100 Poren/Inch) oder zwischen 12 und 24 Poren/cm (30 und 60 Poren/Inch) liegt.

10. Regenerierbares Partikelfilter nach einem der Ansprüche 1 bis 9, **dadurch gekennzeichnet, dass** das Filterelement (9) und/oder das Heizelement (11) im vorderen, der Abgaszuleitung (2) zugewandten Teil des Partikelfilters angeordnet ist.

11. Regenerierbares Partikelfilter nach einem der Ansprüche 1 bis 10, **dadurch gekennzeichnet, dass** das oder die Heizelemente (11) in Strömungsrichtung des Abgases vor dem Filterelement (9) angeordnet sind.

12. Regenerierbares Partikelfilter nach Anspruch 11, **dadurch gekennzeichnet, dass** die Heizelemente (11) in Kanäle (4) ragen, die zum Abgaszuführrohr (2) hin verschlossen sind.

## Claims

1. Regenerable particulate filter, in particular for removing soot particles from exhaust gases of internal combustion engines, with a filter casing (1) which has an exhaust gas feed pipe and an exhaust gas removal pipe (2; 3) and in which, disposed between the exhaust gas feed pipe (2) and the exhaust gas removal pipe (3), there are a filter part (8) in the front in the flow direction, a filter part (7) at the rear in the flow direction and, between these parts (7, 8) in the flow direction and at least partly covering the flow cross section, a filter element (9) and a heating element (11) for heating the filtrate or soot deposited on the filter parts (7, 8) to ignition temperature, **characterised in that** channels (4) for forming a defined flow profile of the particle-laden exhaust gas streams are distributed over the flow cross section in the front filter part (8), at least some of which channels have shut-off regions.

2. Regenerable particulate filter according to Claim 1, **characterised in that** the filter element (9) consists of a ceramic material.

3. Regenerable particulate filter according to either of the preceding Claims, **characterised in that** the heating element (11) is held by a heating element carrier (10).

4. Regenerable particulate filter according to Claim 3, **characterised in that** the filter element (9) comprises the heating element carrier (10).

5. Regenerable particulate filter according to any one of the preceding Claims, **characterised in that** the rear filter part (7) comprises a material of a high thermal stability and good thermal conductivity, and that the front filter part (8) consists of a ceramic material which has lower requirements in thermal terms than the first part (7).

6. Regenerable particulate filter according to Claim 5, **characterised in that** the rear filter part (7) consists of silicon carbide and the front filter part (8) of cordierite.

7. Regenerable particulate filter according to any one of Claims 1 to 6, **characterised in that** the filter element (9) is a ceramic disc which is made of a highly porous ceramic foam.

8. Regenerable particulate filter according to any one of Claims 1 to 7, **characterised in that**, measured in the flow direction of the exhaust gas, the filter element (9) is from 3 to 40 mm thick.

9. Regenerable particulate filter according to any one of the preceding Claims, **characterised in that** the number of pores of the filter element (9) is in the range between 4 and 40 pores/cm (10 and 100 pores/inch) or between 12 and 24 pores/cm (30 and 60 pores/inch).

10. Regenerable particulate filter according to any one of Claims 1 to 9, **characterised in that** the filter element (9) and/or the heating element (11) are/is disposed in the front part, which faces the exhaust gas feed pipe (2), of the particulate filter.

11. Regenerable particulate filter according to Claims 1 to 10, **characterised in that** the heating element or elements (11) is/are disposed before the filter element (9) in the flow direction of the exhaust gas.

12. Regenerable particulate filter according to Claim 11, **characterised in that** the heating elements (11) project into channels (4) which are shut off towards the exhaust gas feed pipe (2).

## Revendications

1. Filtre à particules régénérables, en particulier pour enlever les particules de suie provenant de gaz d'échappement de moteurs à combustion interne, avec un carter de filtre (1) qui présente un conduit d'amenée (2) des gaz d'échappement et un conduit d'évacuation (3) des gaz d'échappement, dans lequel une partie avant (8) du filtre dans le sens de l'écoulement, une partie arrière (7) du filtre dans le sens de l'écoulement sont aménagées entre le conduit d'amenée (2) des gaz d'échappement et le conduit d'évacuation (3) des gaz d'échappement et, un élément filtrant (9) et un élément de chauffage (11) sont aménagés dans le sens de l'écoulement entre ces parties (7, 8), recouvrant au moins partiellement la section d'écoulement, pour chauffer à une température d'inflammation le produit de filtrage ou la suie déposés sur les parties du filtre (7, 8), **caractérisé en ce que** des conduits (4) sont répartis dans la partie avant du filtre (8) sur la section découlement pour former un profil d'écoulement défini pour les flux de gaz d'échappement chargés de particules et, présentant au moins partiellement des zones obturées.

2. Filtre à particules régénérables selon la revendication 1, **caractérisé en ce que** l'élément filtrant (9) est composé d'un matériau en céramique.

3. Filtre à particules régénérables selon l'une des revendications précédentes, **caractérisé en ce que** l'élément de chauffage (11) sera maintenu par un support d'élément de chauffage (10).

4. Filtre à particules régénérables selon la revendication 3 **caractérisé en ce que** l'élément filtrant (9) comprend le support d'élément de chauffage (10).

5. Filtre à particules régénérables selon l'une des revendications précédentes, **caractérisé en ce que** la partie arrière (7) du filtre est constituée d'un matériau très résistant à la chaleur et possède une bonne conductibilité thermique et que la partie avant du filtre (8) est constituée d'un matériau en céramique moins résistant à la chaleur que la première partie (7).

6. Filtre à particules régénérables selon la revendication 5, **caractérisé en ce que** la partie arrière du filtre (7) est constituée de carbure de silicium et la partie avant du filtre (8) est constituée de cordiérite.

7. Filtre à particules régénérables selon l'une des revendications 1 à 6, **caractérisé en ce que** l'élément filtrant (9) est un disque en céramique (9) fabriqué en mousse de céramique très poreuse.

8. Filtre à particules régénérables selon l'une des revendications 1 à 7, **caractérisé en ce que** l'épaisseur de l'élément filtrant (9), mesurée dans le sens de l'écoulement des gaz d'échappement, est comprise entre 3 et 40 mm.

9. Filtre à particules régénérables selon l'une des revendications précédentes, **caractérisé en ce que** le nombre de pores de l'élément filtrant (9) se situe dans la plage comprise entre 4 et 40 pores/cm (10 et 100 pores/pouce) ou entre 12 et 24 pores/cm (30 et 60 pores/pouce).

10. Filtre à particules régénérables selon l'une des revendications 1 à 9, **caractérisé en ce que** l'élément filtrant (9) et/ou l'élément de chauffage (11) est aménagé dans la partie avant du filtre à particules orientée vers le conduit d'amenée (2) des gaz d'échappement.

11. Filtre à particules régénérables selon l'une des revendications 1 à 10, **caractérisé en ce que** le ou les éléments de chauffage (11) est/sont aménagé(s) dans le sens de l'écoulement des gaz d'échappement devant l'élément filtrant (9).

12. Filtre à particules régénérables selon la revendication 11, **caractérisé en ce que** les éléments de chauffage (11) se dressent dans les conduits (4) dont l'extrémité menant au tuyau d'amenée (2) des gaz d'échappement est obturée.
